(19) Europäisches Patentamt
European Patent Office
Office européen des brevets

(11) **EP 2 482 560 A2**

(12) **EUROPEAN PATENT APPLICATION**

(43) Date of publication:
**01.08.2012 Bulletin 2012/31**

(51) Int Cl.:
***H04N 13/00*** *(2006.01)*

(21) Application number: **11187343.6**

(22) Date of filing: **31.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.01.2011 JP 2011014605**

(71) Applicant: **Kabushiki Kaisha Toshiba
Tokyo 105-8001 (JP)**

(72) Inventor: **Kumagai, Rika
Tokyo, 105-8001 (JP)**

(74) Representative: **Henkel, Breuer & Partner
Patentanwälte
Maximiliansplatz 21
80333 München (DE)**

(54) **Video display apparatus and video display method**

(57)     A video display apparatus includes a parallax amount measuring module, a viewing distance measuring module, and a proper parallax amount determination module. The parallax amount measuring module is configured to measure an amount of parallax of stereoscopic video in a stereoscopic video viewing device used for viewing of stereoscopic video. The viewing distance measuring module is configured to measure a viewing distance between the stereoscopic video viewing device and a viewer. The proper parallax amount determination module is configured to determine whether the amount of parallax is proper to the viewer or not based on the viewing distance.

*FIG. 1*

**Description**

FIELD

An exemplary embodiment of the invention relates to a video display apparatus and a video display method for displaying stereoscopic video.

BACKGROUND

A stereoscopic video display apparatus which can control a stereoscopic effect of stereoscopic video by evaluating eyestrain is proposed. The stereoscopic video display apparatus is formed so that electrodes for detecting Electro-Oculogram (EOG) waveforms are attached to liquid crystal shutter glasses, lowering of a convergence function caused by fatigue of both eyes is detected based on a potential difference signal between the right eye and the left eye, eyestrain is estimated based on the quantity of lowering of the convergence function, and a detection unit integrates angles of convergence in a certain period, grasps the quantity of lowering of a visual function based on the counted value or the integrated value and adjusts the stereoscopic effect.

There is however a demand for a stereoscopic video display apparatus which can adjust stereoscopic video before a viewer fatigues based on determination from a so-called situation of contents, for example, by using information of a distance to the viewer.

SUMMARY

An object of an exemplary embodiment of the invention is to provide a video display apparatus and a video display method which can adjust stereoscopic video before a viewer fatigues.

According to an exemplary embodiment of the invention, there is provided a video display apparatus including a parallax amount measuring module, a viewing distance measuring module, and a proper parallax amount determination module. The parallax amount measuring module is configured to measure an amount of parallax of stereoscopic video in a stereoscopic video viewing device used for viewing of stereoscopic video. The viewing distance measuring module is configured to measure a viewing distance between the stereoscopic video viewing device and a viewer. The proper parallax amount determination module is configured to determine whether the amount of parallax is proper to the viewer or not based on the viewing distance.

BRIEF DESCRIPTION OF THE DRAWINGS

A general configuration that implements the various features of the invention will be described with reference to the drawings. The drawings and the associated descriptions are provided to illustrate embodiments of the invention and should not limit the scope of the invention.

Fig. 1 is a schematic functional block diagram showing an apparatus (system) according to an exemplary embodiment of the invention.
Fig. 2 is a flow chart showing operation of the exemplary embodiment.
Fig. 3 is a schematic view for explaining a depth range in which stereoscopic video can be viewed comfortably.
Fig. 4 is a block configuration view for schematically explaining a stereoscopic video reproducing system according to the exemplary embodiment.
Fig. 5 is a block configuration diagram for explaining a signal processing system of a digital broadcast receiver configuring the stereoscopic video reproducing system according to the exemplary embodiment.
Figs. 6A and 6B are explanatory views showing how to calculate amounts of parallax according to the exemplary embodiment.

DETAILED DESCRIPTION OF THE EMBODIMENTS

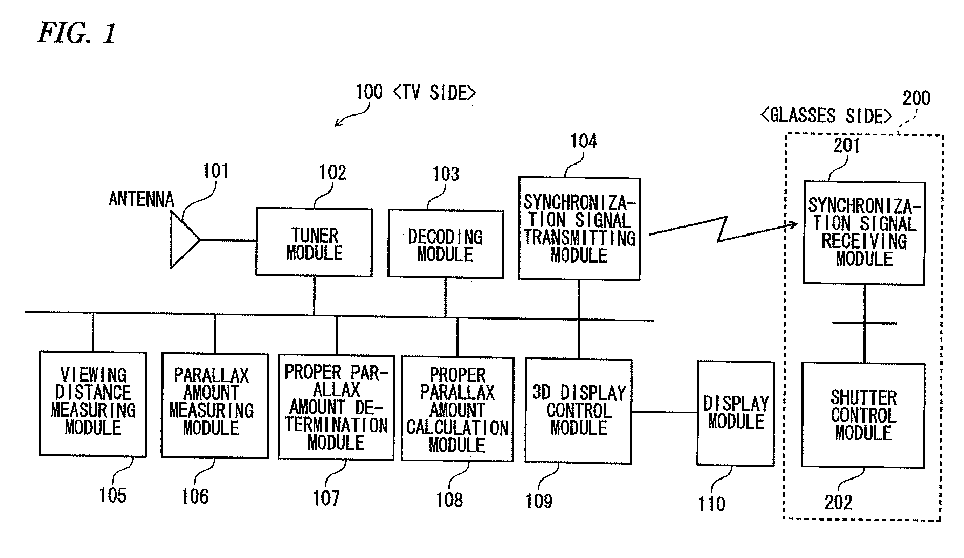

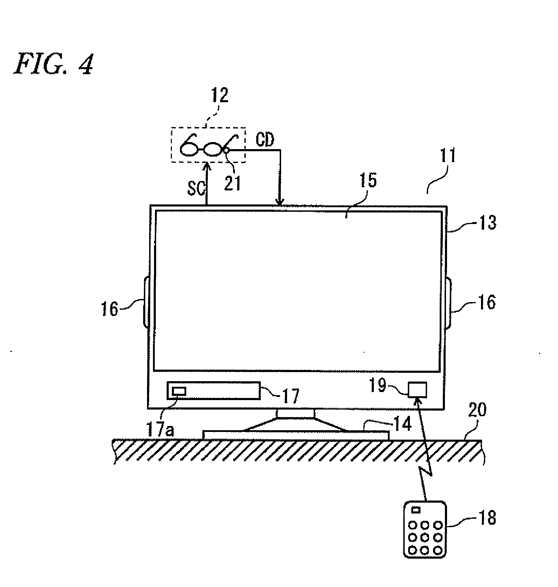

An exemplary embodiment of the invention will be described below with reference to Figs. 1 to 6B.
In this exemplary embodiment, for example, there is assumed a system for displaying three-dimensional (3D) video by using 3D glasses. The 3D glasses can make a viewer visually recognize a left image by the left eye and a right image by the right eye based on liquid crystal shutter control of the left and right images, so that the viewer can grasp the thus displayed video stereoscopically.
First, Fig. 4 schematically shows a stereoscopic video reproducing system described in this exemplary embodiment. The stereoscopic video reproducing system has a digital television broadcast receiver 11 as a stereoscopic video reproducing apparatus (a video display apparatus), and a pair of stereoscopic glasses 12 (a stereoscopic video viewing device) for recognizing stereoscopic video from video displayed on the digital television broadcast receiver 11.

Of these, the digital television broadcast receiver 11 has a thin cabinet 13, and a stand 14 for supporting the cabinet 13. A liquid crystal display panel 15 is disposed as a video display module in a frontal center portion of the cabinet 13. Speakers 16 are disposed on opposite sides of the cabinet 13 so that stereo audio can be played back.

An operation module 17 including a main power switch 17a and a photo receiving module 19 for receiving operation information transmitted from a remote controller 18 are disposed in a frontal lower portion of the cabinet 13. Incidentally, the stand 14 is connected to the bottom center portion of the cabinet 13 so that the cabinet 13 can rotate. The stand 14 is configured so that the stand 14 supports the cabinet 13 with the cabinet 13 risen in a state where the stand 14 is placed on a horizontal surface of a certain base 20.

Upon reception of a video signal broadcasted for stereoscopic vision, the digital television broadcast receiver 11 generates a right-eye video signal and a left-eye video signal based on the received video signal to display right-eye video and left-eye video alternately on the liquid crystal display panel 15.

The digital television broadcast receiver 11 further generates shutter control signals SC indicating a video display period of the right-eye video and a video display period of the left-eye video respectively to output the generated shutter control signals SC to the stereoscopic glasses 12.

The stereoscopic glasses 12 are controlled so that a left-eye shutter is closed at the time of displaying the right-eye video and a right-eye shutter is closed at the time of displaying the left-eye video based on the shutter control signals SC supplied from the digital television broadcast receiver 11. Consequently, the viewer can recognize stereoscopic video.

The stereoscopic glasses 12 are provided with a charge detection module 21 for detecting whether the stereoscopic glasses 12 are running out of battery or not, that is, for detecting the amount of charge stored in the battery. A charge detection signal CD outputted from the charge detection module 21 is supplied to the digital television broadcast receiver 11.

When the charge detection signal CD is normal, the digital television broadcast receiver 11 performs stereoscopic video display by displaying the right-eye video and the left-eye video alternately on the liquid crystal panel 15.

When the charge detection signal CD is not normal, for example, the digital television broadcast receiver 11 operates to convert the received stereoscopic video signal into an ordinary two-dimensional display video signal and display video of the two-dimensional display video signal on the liquid crystal display panel 15.

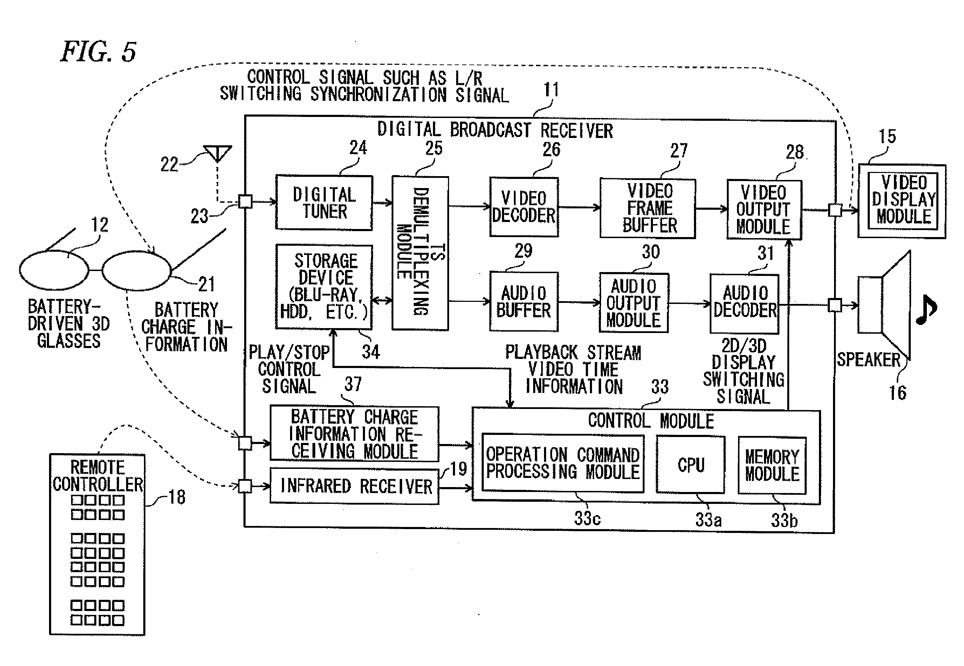

Fig. 5 is a main block configuration diagram in this exemplary embodiment. An upper half of Fig. 5 is a block diagram of a general digital broadcast receiver (description referring to the reference numerals will be made later). This receiver has a function of receiving 3D video or inputting 3D from a video recorder and displaying the 3D video on a video display module. Therefore, a left/right (L/R) switching synchronization signal is generated for operating the 3D glasses.

There is provided a function of transmitting status information of a battery contained in the 3D glasses by wireless, wire or another method as a path from the 3D glasses to the digital broadcast receiver. Between a control module and the video recorder, a control signal for play, stop, etc. of the video recorder can be transmitted from the control module to the video recorder, and the playback time of video contents to be reproduced can be transmitted from the video recorder to the control module.

It is possible to provide a function of outputting a 2D/3D switching signal from the control module to a video output potion so as to select either a 2D output signal or a 3D output signal in the video output module. As for a 3D video contents input method, use of digital broadcasting or an external storage device such as a stationary disk device, a Blu-ray(R), etc. is assumed.

Fig. 5 schematically shows a signal processing system of the digital television broadcast receiver 11. That is, a digital television broadcast signal received by an antenna 22 is fed to a channel selection and demodulation module (digital tuner) 24 through an input terminal 23. The channel selection and demodulation module 24 selects a signal of a desired channel from the input digital television broadcast signal and applies a demodulating process to the broadcast signal of the selected channel to thereby generate a transport stream (TS).

The TS outputted from the channel selection and demodulation module 24 is fed to a TS demultiplexing module 25 and demultiplexed into a video component and an audio component. Of these, the video component is subjected to a decoding process by a video decoder 26 so as to be restored to an original digital video signal and then the original digital video signal is stored in a video frame buffer 27. The video signal stored in the video frame buffer 27 is read into the video output module 28 frame by frame and subjected to predetermined signal processing (which will be described later) and then fed to the liquid crystal display panel 15 serving as a video display module for video display.

The audio component demultiplexed by the TS demultiplexing module 25 is once stored in an audio buffer 29 and then read into an audio output module 30 and subjected to predetermined signal processing. The audio component outputted from the audio output module 30 is subjected to a decoding process by an audio decoder 31 so as to be restored into original digital audio data and then the original digital audio data is converted into analog data to be subjected to audio reproduction by the speakers 16.

Incidentally, the digital television broadcast receiver 11 has a storage device 34. An optical disk recording/reproducing device for performing recording/reproduction on/from an optical disk such as a digital versatile disk (DVD) or an external recording/reproducing device such as an external hard disk drive (HDD) may be used as the storage device 34. A TS outputted from the storage device 34 is fed to the TS demultiplexing module 25. The TS demultiplexing module 25 operates to select either of the TS fed from the channel selection and demodulation module 24 and the TS fed from the storage device 34 and demultiplex the selected TS into a video component and an audio component.

The aforementioned various operations including various kinds of receiving operations of the digital television broadcast receiver 11 are generally controlled by a control module 33. The control module 33 includes a central processing unit (CPU) 33a. Operation information from the operation module 17 or operation information transmitted from the remote controller 18 and received at the photo receiving module 19 is received by an operation command processing module 33c to thereby control the respective modules so that the operation contents are reflected.

In this case, the control module 33 uses a memory module 33b. The memory module 33b mainly has a read only memory (ROM) which stores a control program performed by the CPU 33a, a random access memory (RAM) for providing a work area to the CPU 33a, and a nonvolatile memory which stores various kinds of setting information, control information, etc.

A fundamental clock due to an oscillator not shown or a clock obtained by frequency-dividing the fundamental clock is led to the CPU 33a or the like so that a not-shown timer made of hardware or software in the inside or outside of the CPU 33a forms the base of a viewing limiting timer which will be described later.

When the video signal fed frame by frame from the video frame buffer 27 is an ordinary two-dimensional display video signal, the video output module 28 applies a frame double speed conversion process for displaying video on the liquid crystal display panel 15 to the video signal and then feeds the processed video signal to the liquid crystal display panel 15 to display video.

When the video signal fed frame by frame from the video frame buffer 27 is a stereoscopic video signal, the video output module 28 generates a right-eye video signal and a left-eye video signal from the video signal and outputs these video signals alternately to the liquid crystal display panel 15 to display video.

On this occasion, the video output module 28 generates shutter control signals SC indicating a duration for displaying the right-eye video and a duration for displaying the left-eye video respectively and outputs the generated shutter control signals SC to the stereoscopic glasses 12 through an output terminal.

Therefore, the stereoscopic glasses 12 are controlled based on the shutter control signals SC fed from the digital television broadcast receiver 11 so that the left-eye shutter is closed at the time of displaying the right-eye video while the right-eye shutter is closed at the time of displaying the left-eye video. As a result, the viewer can recognize the stereoscopic video.

Incidentally, whether the video signal fed frame by frame from the video frame buffer 27 is an ordinary two-dimensional display video signal or a stereoscopic video signal can be determined easily, for example, in such a manner that the control module 33 detects attribute information added to the video signal which is a subject of video display.

As described above, the stereoscopic glasses 12 have the charge detection module 21 for detecting the amount of charge stored in the battery.

The charge detection module 21 transmits a charge detection signal CD by wireless, so that the transmitted charge detection signal CD is received at a battery charge information receiving module 37. When the charge detection signal CD received at the battery charge information receiving module 37 and indicating the amount of charge stored in the battery is normal, the control module 33 makes the video output module 28 generate the right-eye video signal and the left-eye video signal from the video signal and makes the liquid crystal display panel 15 display video of these video signals alternately to thereby perform display of the stereoscopic video.

On the other hand, when the charge detection signal CD is not normal, the received stereoscopic video signal is converted into an ordinary two-dimensional display video signal and a frame double speed conversion process for displaying video on the liquid crystal display panel 15 is applied to the two-dimensional display video signal and then the processed two-dimensional display video signal is fed to the liquid crystal display panel 15 to display video.

Fig. 1 is a schematic functional block diagram showing an apparatus (system) according to an exemplary embodiment.

This system includes a television side 100, and a glasses side 200. The television side 100 has an antenna module 101, a tuner module 102, a decoding module 103, a synchronization signal transmitting module 104, a viewing distance measuring module 105, a parallax amount measuring module 106, a proper parallax amount determination module 107, a proper parallax amount calculation module 108, and a 3D display control module 109. The glasses side 200 has a synchronization signal receiving module 201, and a shutter control module 202. This system performs control so that the amount of parallax of 3D video is suppressed within a comfortable range. A display module 110 is a display device such as a monitor for displaying the 3D video. In terms of hardware, the television side 100 is included in the digital television broadcast receiver while the glasses side 200 is included in the stereoscopic glasses 12.

The antenna module 101 corresponds to the antenna 22 and the input terminal 23. The tuner module 102 corresponds to the digital tuner 24. The decoding module 103 corresponds to the video decoder 26, and so on. The synchronization signal transmitting module 104 and the 3D display control module 109 correspond to the video output module 28, and so on.

The viewing distance measuring module 105, the parallax amount measuring module 106, the proper parallax amount determination module 107 and the proper parallax amount calculation module 108 are configured as functions of the control module 33. Respective constituent elements will be described below with respect to the functions of the control module 33.

The antenna module 101 is a module which receives a signal of digital broadcasting or the like. The tuner module 102 receives and selects a channel of a wireless television broadcast such as a digital broadcast.

The decoding module 103 converts the received signal into a signal capable of being displayed on television. The synchronization signal transmitting module 104 transmits a signal for controlling the active shutter glasses in accordance with frame sequential display.

The viewing distance measuring module 105 measures the distance of the television from the viewer (glasses). For example, there is provided a camera so that the distance is measured based on the size of a person or glasses image-captured by the camera. Particularly, when glasses are provided or designated by a television manufacturer, more accurate measurement can be made because the size of the glasses is known.

The parallax amount measuring module 106 measures the amount of parallax by a block matching method or a rubber matching method. The amount of parallax may be used as an average of amounts of parallax on the whole of video contents or may be used as the amount of parallax of video in the current frame. For example, the sum of absolute values of differences (SAD) or the sum of squares of differences (SSD) is often used as a function for evaluating the correlation of pixel blocks in the block matching method. When there are a 5×5 pixel block and another 5×5 pixel block in a frame, SAD and SSD are represented by the following expressions respectively.

[Numeral 1]

$$SAD = \sum_{i=1}^{5} \sum_{j=1}^{5} \left| A_{ij} - B_{ij} \right| \qquad (1)$$

[Numeral 2]

$$SSD = \sum_{i=1}^{5} \sum_{j=1}^{5} \left\{ A_{ij} - B_{ij} \right\}^2 \qquad (2)$$

in which $A_{ij}$ and $B_{ij}$ represent values of luminance.

The proper parallax amount determination module 107 determines whether the amount of parallax (range of depth for protrusion, depression, or the like.) measured by the parallax amount measuring module 106 is in a recommended range of 3DC safety guidelines (which will be described later) as a depth range of comfortable viewing in accordance with the viewing distance measuring module 105 or not.

The proper parallax amount calculation module 108 has a function of suppressing the amount of parallax (the amount of depth) within a depth range of comfortable viewing when the proper parallax amount determination module 107 determines that the amount of parallax is improper. This is a function of eliminating or totally weakening the 3D effect.

When the proper parallax amount determination module 107 determines that the amount of parallax is proper, the 3D display control module 109 displays the parallax image directly. When the proper parallax amount determination module 107 determines that the amount of parallax is improper, the 3D display control module 109 displays a 3D image of the amount of parallax set again by the proper parallax amount calculation module 108.

The synchronization signal receiving module 201 receives a signal of the synchronization signal transmitting module 105. The shutter control module 202 controls the shutters based on the signal received by the synchronization signal receiving module 201.

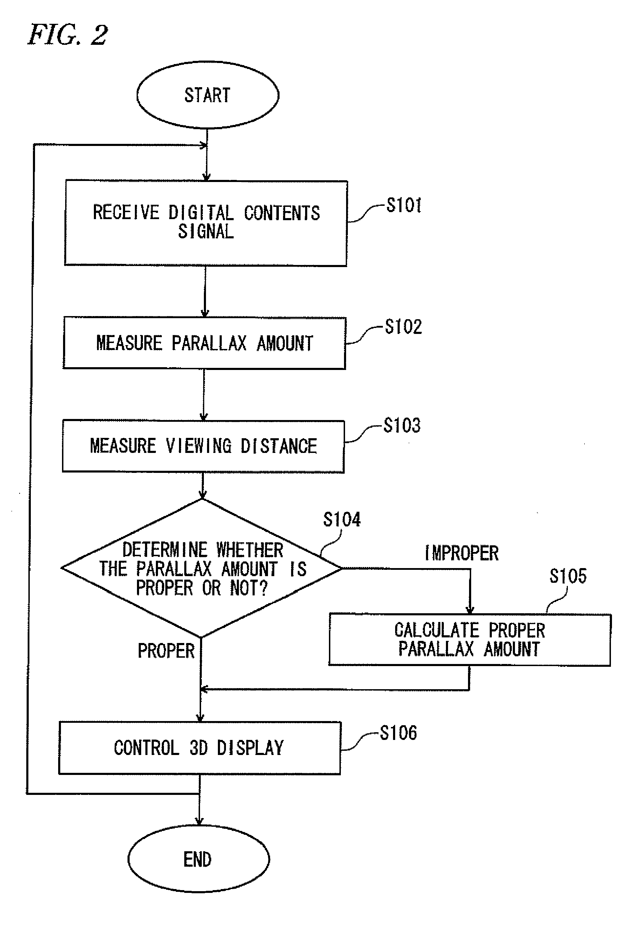

A flow of processing will be described below with reference to Fig. 2. This flow indicates a flow of processing on the television side 100.

Step S101: A video contents signal is received at the antenna module 101 and subjected to a decoding process by the decoding module 103 through the tuner module 102.

Step S102: The amount of parallax of the video signal received in the step S101 is measured by the parallax amount measuring module 106.

Step 103: The distance between the television and the viewer (e.g. glasses) is measured by the viewing distance measuring module 105.

Step 104: Whether the amount of parallax of video contents extracted in the step S102 is in a proper range in accordance with the viewing distance measured in the step S103 or not, is determined by the proper parallax amount determination module 107. The proper value is determined in such a manner that the value of protrusion or depression in the recommended viewing distance of the television is calculated so that whether the amount of parallax of video currently viewed is in the range or not is determined.

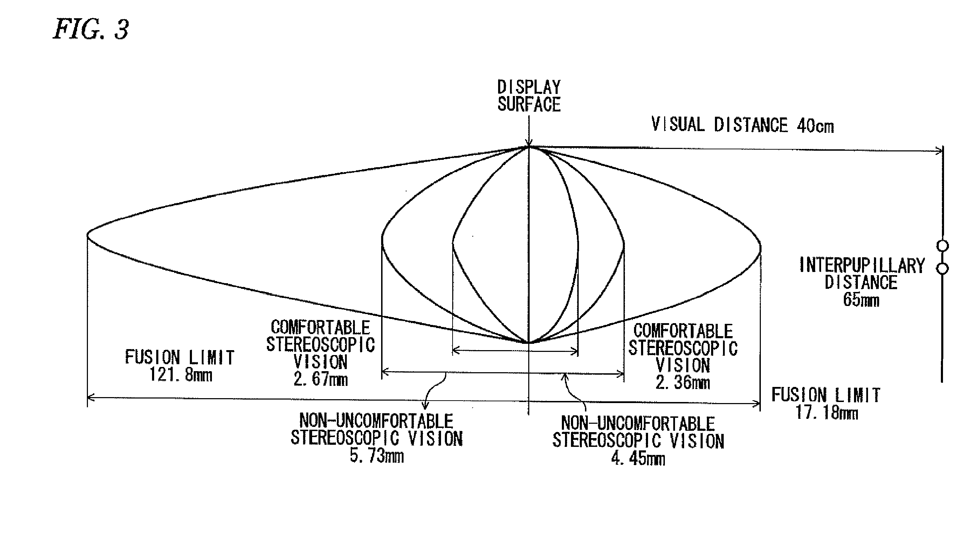

For example, according to the certain safety guideline, "a comfortable range of 60 arcminutes (1 degree) or less is a standard", so that a parallactic angle of 1 degree is used as a reference for calculating the comfortable parallax range. The calculating method will be described later as shown in Fig. 3.

Step S105: When the determination in the step S104 results in that the amount of parallax is improper, the proper amount of parallax in the recommended viewing distance of the television is calculated by the proper parallax amount calculation module 108. It is for the purpose of weakening the 3D effect (reducing the amount of parallax (the amount of protrusion or depression)).

Step S106: When the determination in the step S104 results in that the amount of parallax is proper, the 3D display control module 109 displays 3D video without any change of the amount of parallax. On the other hand, when the determination in the step S104 results in that the amount of parallax is improper, the 3D display control module 109 displays 3D video in accordance with the amount of parallax calculated in the step S105.

Fig. 3 is a schematic view for explaining a depth range in which stereoscopic video can be viewed comfortably.

Fig. 3 shows the case where the viewer views 3D video at a distance of 40cm from the display surface. For example, when the viewer actually views 3D video at a distance of 3 m, calculation may be made so that the respective following dimensions are simply multiplied by 3 m ÷ 40 cm = 7.5.

First, the amount of protrusion in comfortable stereoscopic vision is 2.36 mm, the amount of protrusion in non-uncomfortable stereoscopic vision is 4.45 mm, and the amount of protrusion in fusion limit is 17.18 mm. On the other hand, the amount of depression in comfortable stereoscopic vision is 2.67 mm, the amount of depression in non-uncomfortable stereoscopic vision is 5.73 mm, and the amount of depression in fusion limit is 121.8 mm.

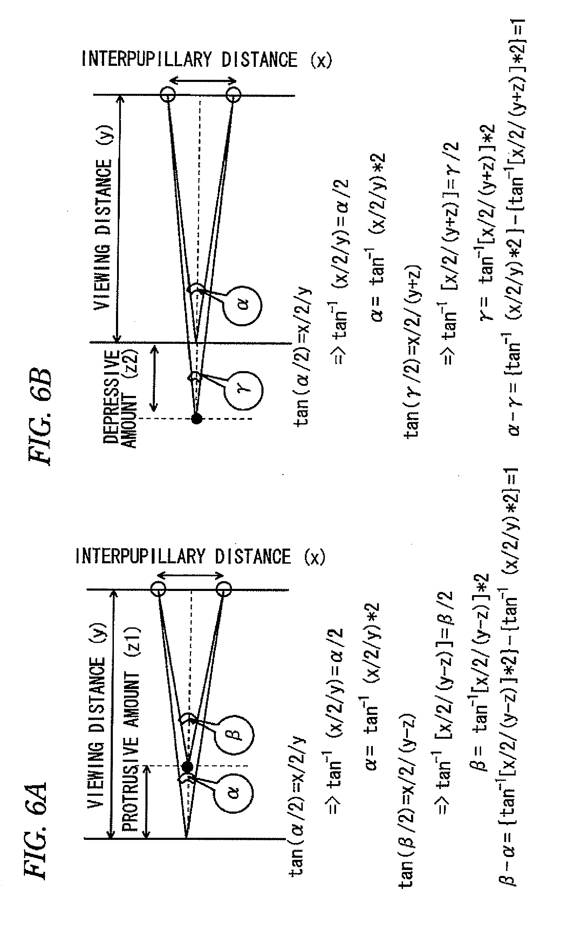

Figs. 6A and 6B are explanatory views showing how to calculate the amount of parallax in this exemplary embodiment.

In Fig. 6A, the difference β-α is defined as follows when x is an interpupillary distance, y is a viewing distance, z is a protrusive amount, and, α and β are two kinds of angles (degrees) between pupils.

That is, $\tan(\alpha/2)=x/2/y$ can be transformed into $\tan^{-1}(x/2/y)=\alpha/2$ and further transformed into $\alpha=\tan^{-1}(x/2/y)*2$.

Similarly, $\tan(\beta/2)=x/2/(y-z)$ can be transformed into $\tan^{-1}[x/2/(y-z)]=\beta/2$ and further transformed into $\beta=\tan^{-1}[x/2/(y-z)]*2$.

Accordingly,

$$\beta-\alpha=\{\tan^{-1}[x/2/(y-z)]*2\}-\{\tan^{-1}(x/2/y)*2\}=1.$$

Similarly, in Fig. 6B, the difference α-γ is defined as follows when x is an interpupillary distance, y is a viewing distance, and z is a depressive amount, and, α and γ are two kinds of angles (degrees) between the pupils. Incidentally, similarly to Fig. 6A, $\alpha=\tan^{-1}(x/2/y)*2$ is obtained.

Similarly, $\tan(\gamma/2)=x/2/(y+z)$ can be transformed into $\tan^{-1}[x/2/(y+z)]=\gamma/2$ and further transformed into $\gamma=\tan^{-1}[x/2/(y+z)]*2$.

Accordingly,

$$\alpha-\gamma=\{\tan^{-1}(x/2/y)*2\}-\{\tan^{-1}[x/2/(y+z)]*2\}=1.$$

Incidentally, besides the aforementioned exemplary embodiment, the following modification may be made.

(1) Although an active shutter type stereoscopic video display apparatus is assumed in the aforementioned basic configuration, the basic configuration can be applied to a naked eye type stereoscopic video display apparatus without use of glasses. In this case, some module for measuring the distance to the viewer is required but a general method of recognizing an image using a camera or measuring using a motion sensor or the like may be used.

(2) Measurement of the amount of parallax can be determined based on not only the average on the whole of the distribution but also the value of a notable point or the average in each block due to blocking.

(3) It is preferable to make configuration so that viewer's setting can be made so that display is made with the 3D effect reduced when the amount of parallax is larger than a proper amount.

To enjoy stereoscopic video comfortably in the stereoscopic video display apparatus, it is necessary to limit the depth range (protrusion or depression), that is, the parallax range. When determination and adjustment are made based on whether video is in the comfortable parallax range or not, stereoscopic video can be viewed without visual fatigue.

According to the aforementioned exemplary embodiment, the amount of parallax (the distribution of parallax) of stereoscopic video contents and the viewing distance between the viewer and the television are measured in order to determine whether the amount of parallax is in a proper parallax (depth) range or not. When the amount of parallax of the video is out of the range, the amount of parallax is adjusted or the 3D effect is discontinued so that the viewer can view stereoscopic video comfortably. Consequently, eyestrain due to viewing of stereoscopic video and other health hazards which may be caused by the eyestrain can be reduced, and the viewer can unsolicitously view video even in a long time.

In order to detect the degree of fatigue, the glasses may be made heavier or a function needs to be added. However, according to the above described configuration, the detection of the degree of fatigue is not needed. Because determination is made based on the situation of contents, 3D video can be adjusted before the viewer fatigues and general stereoscopic glasses can be used.

Incidentally, the invention is not limited to the aforementioned exemplary embodiment and various modifications may be made on the invention without departing from the scope and spirit of the invention.

Constituent elements disclosed in the aforementioned exemplary embodiment may be combined suitably to form various inventions. For example, some constituent elements may be removed from all the constituent elements disclosed in the exemplary embodiment. Further, constituent elements regarding different embodiments may be combined.

**Claims**

1. A video display apparatus comprising:

   a parallax amount measuring module configured to measure an amount of parallax of stereoscopic video in a stereoscopic video viewing device used for viewing of stereoscopic video;
   a viewing distance measuring module configured to measure a viewing distance between the stereoscopic video viewing device and a viewer; and
   a proper parallax amount determination module configured to determine whether the amount of parallax is proper to the viewer or not based on the viewing distance.

2. The video display apparatus of Claim 1, further comprising a proper parallax amount calculation module configured to calculate an amount of parallax proper to the viewer when the proper parallax amount determination module determines that the amount of parallax is improper.

3. The video display apparatus of Claim 2, further comprising a display control module configured to perform display control of the stereoscopic video viewing device by using an output of the proper parallax amount calculation module.

4. The video display apparatus of Claim 3, further comprising a display module configured to display video in response to the display control.

5. A video display method comprising:

   measuring an amount of parallax of stereoscopic video;
   measuring a viewing distance to a viewer; and
   determining whether the amount of parallax is proper to the viewer or not based on the viewing distance.

6. The video display method of Claim 5, further comprising calculating an amount of parallax proper to the viewer when the amount of parallax is determined to be improper.

7. The video display method of Claim 6, further comprising performing display control of a stereoscopic video viewing device by using an output of the proper parallax amount calculation.

**8.** The video display method of Claim 7, further comprising displaying video in response to the display control.

FIG. 1

*FIG. 2*

```
                    ┌─────────────┐
                    │    START    │
                    └──────┬──────┘
                           │
    ┌──────────────────────┤
    │                      ▼
    │      ┌──────────────────────────────┐
    │      │  RECEIVE DIGITAL CONTENTS     │──── S101
    │      │           SIGNAL              │
    │      └───────────────┬──────────────┘
    │                      │
    │                      ▼
    │      ┌──────────────────────────────┐
    │      │   MEASURE PARALLAX AMOUNT     │──── S102
    │      └───────────────┬──────────────┘
    │                      │
    │                      ▼
    │      ┌──────────────────────────────┐
    │      │   MEASURE VIEWING DISTANCE    │──── S103
    │      └───────────────┬──────────────┘
    │                      │
    │                      ▼                          S104
    │              ◇─────────────────◇
    │            ╱ DETERMINE WHETHER    ╲      IMPROPER
    │           ◇  THE PARALLAX AMOUNT IS ◇─────────────┐        S105
    │            ╲   PROPER OR NOT?     ╱                ▼
    │              ◇─────────────────◇      ┌──────────────────────────┐
    │                      │                │  CALCULATE PROPER         │
    │               PROPER │                │  PARALLAX AMOUNT          │
    │                      │                └────────────┬─────────────┘
    │                      │◄───────────────────────────┘
    │                      ▼
    │      ┌──────────────────────────────┐
    │      │     CONTROL 3D DISPLAY        │──── S106
    │      └───────────────┬──────────────┘
    └──────────────────────┤
                           ▼
                    ┌─────────────┐
                    │     END     │
                    └─────────────┘
```

*FIG. 3*

DISPLAY SURFACE

VISUAL DISTANCE 40cm

INTERPUPILLARY DISTANCE 65mm

FUSION LIMIT 121.8mm

COMFORTABLE STEREOSCOPIC VISION 2.67mm

COMFORTABLE STEREOSCOPIC VISION 2.36mm

FUSION LIMIT 17.18mm

NON-UNCOMFORTABLE STEREOSCOPIC VISION 5.73mm

NON-UNCOMFORTABLE STEREOSCOPIC VISION 4.45mm

EP 2 482 560 A2

*FIG. 4*

*FIG. 5*

CONTROL SIGNAL SUCH AS L/R
SWITCHING SYNCHRONIZATION SIGNAL

11

DIGITAL BROADCAST RECEIVER

22

23

24

25

26

27

28

15

DIGITAL
TUNER

TS DEMULTIPLEXING MODULE

VIDEO
DECODER

VIDEO
FRAME
BUFFER

VIDEO
OUTPUT
MODULE

VIDEO
DISPLAY
MODULE

12

21

STORAGE
DEVICE
(BLU-RAY,
HDD, ETC.)

29

30

31

AUDIO
BUFFER

AUDIO
OUTPUT
MODULE

AUDIO
DECODER

BATTERY-
DRIVEN 3D
GLASSES

BATTERY
CHARGE IN-
FORMATION

PLAY/STOP
CONTROL
SIGNAL

34

PLAYBACK STREAM
VIDEO TIME
INFORMATION

2D/3D
DISPLAY
SWITCHING
SIGNAL

SPEAKER

16

37

33

BATTERY CHARGE
INFORMATION RE-
CEIVING MODULE

CONTROL MODULE

REMOTE
CONTROLLER

18

19

INFRARED RECEIVER

OPERATION COMMAND
PROCESSING MODULE

CPU

MEMORY
MODULE

33c

33a

33b

EP 2 482 560 A2

## FIG. 6A

VIEWING DISTANCE (y)

PROTRUSIVE AMOUNT (z1)

INTERPUPILLARY DISTANCE (x)

$\alpha$   $\beta$

$\tan(\alpha/2)=x/2/y$

$\Rightarrow \tan^{-1}(x/2/y)=\alpha/2$

$\alpha= \tan^{-1}(x/2/y)*2$

$\tan(\beta/2)=x/2/(y-z)$

$\Rightarrow \tan^{-1}[x/2/(y-z)]=\beta/2$

$\beta= \tan^{-1}[x/2/(y-z)]*2$

$\beta-\alpha=\{\tan^{-1}[x/2/(y-z)]*2\}-\{\tan^{-1}(x/2/y)*2\}=1$

## FIG. 6B

DEPRESSIVE AMOUNT (z2)

VIEWING DISTANCE (y)

INTERPUPILLARY DISTANCE (x)

$\gamma$   $\alpha$

$\tan(\alpha/2)=x/2/y$

$\Rightarrow \tan^{-1}(x/2/y)=\alpha/2$

$\alpha= \tan^{-1}(x/2/y)*2$

$\tan(\gamma/2)=x/2/(y+z)$

$\Rightarrow \tan^{-1}[x/2/(y+z)]=\gamma/2$

$\gamma= \tan^{-1}[x/2/(y+z)]*2$

$\alpha-\gamma=\{\tan^{-1}(x/2/y)*2\}-\{\tan^{-1}[x/2/(y+z)]*2\}=1$

EP 2 482 560 A2